(19) Europäisches Patentamt
European Patent Office
Office européen des brevets

(11) **EP 0 773 276 B1**

(12) **FASCICULE DE BREVET EUROPEEN**

(45) Date de publication et mention
de la délivrance du brevet:
**19.07.2000 Bulletin 2000/29**

(51) Int Cl.⁷: **C10G 11/18**, B01J 8/24

(21) Numéro de dépôt: **96402363.4**

(22) Date de dépôt: **07.11.1996**

(54) **Dispositif d'injection d'une charge d'hydrocarbures**

Einspritzapparat für Kohlenwasserstoff-Einsätze

Apparatus for injecting a hydrocarbon feed

(84) Etats contractants désignés:
**BE DE ES FR GB IT NL**

(30) Priorité: **10.11.1995 FR 9513448**

(43) Date de publication de la demande:
**14.05.1997 Bulletin 1997/20**

(73) Titulaire: **INSTITUT FRANCAIS DU PETROLE**
**92852 Rueil-Malmaison Cedex (FR)**

(72) Inventeurs:
• **Gauthier, Thierry**
**69590 Brignais (FR)**
• **Bonifay, Régis**
**92600 Asnières (FR)**

(56) Documents cités:
**EP-A- 0 151 882**   **EP-A- 0 312 428**
**US-A- 4 405 444**   **US-A- 4 808 383**

## Description

La présente invention concerne notamment mais non exclusivement l'injection et plus particulièrement l'injection d'une charge d'hydrocarbure dans un réacteur de craquage catalytique, en lit fluidisé.

Dans les procédés de craquage catalytique en lit fluidisé, appelés dans la technique procédés F.C.C., la charge d'hydrocarbures est injectée dans un réacteur en forme de colonne, dans lequel le catalyseur est maintenu en suspension et se déplace soit suivant un flux essentiellement ascendant (le réacteur est alors dénommé "riser"), soit suivant un flux descendant (le réacteur est alors appelé "dropper").

On se référera ci-après, pour plus de clarté, au cas des réacteurs à flux ascendant, mais la transposition aux réacteurs à flux descendant sera évidente pour l'homme de l'art et les injecteurs de charge qui font l'objet de la présente invention s'appliquent bien entendu aux deux types de réacteurs.

Dans un "riser", le catalyseur régénéré est introduit à la base du réacteur en même temps qu'un gaz porteur, dans un état fluidisé et chaud (entre 650 et 850°C), au-dessous de la zone d'injection de la charge d'hydrocarbures. Celle-ci est introduite dans le réacteur à l'état essentiellement liquide et à une température comprise généralement entre 80 et 350°C.

Entre la zone d'injection de la charge et le sommet du réacteur, le catalyseur cède une partie de son énergie à la charge, qui est alors vaporisée, et craquée en hydrocarbures légers. Ceci a pour effet d'accroître rapidement le volume des gaz, qui transportent de façon accélérée le catalyseur jusqu'au sommet du réacteur, où il est séparé des hydrocarbures. Le mélange d'hydrocarbures et de grains de catalyseurs atteint à la sortie du riser une température d'équilibre habituellement comprise entre 470 et 600°C.

Pendant ces opérations, une faible partie de la charge (généralement entre 3 et 12% en poids) a formé sur les particules de catalyseur un dépôt solide hydrocarboné ou "coke" qui réduit l'activité catalytique du catalyseur et limite la conversion de la charge en produits valorisables. Il est donc nécessaire de régénérer le catalyseur par combustion de ce dépôt de coke, avant de le réintroduire dans le réacteur pour un nouveau cycle de craquage.

Le dépôt de coke sur le catalyseur est généralement d'autant plus important que la charge injectée est plus lourde.

Par ailleurs, les développements récents en matière de craquage catalytique ont montré que des facteurs importants de la réaction de craquage sont la rapidité et l'uniformité de la mise en contact de la charge avec les grains de catalyseur, et donc la qualité de l'atomisation et de la vaporisation de cette charge lors de son injection dans la zone réactionnelle.

Divers systèmes d'injection de la charge d'hydrocarbures dans la zone réactionnelle du réacteur de craquage catalytique ont été décrits dans l'art antérieur.

Le brevet US-A-4 097 243 décrit par exemple un système d'injection de la charge comprenant une série de tubes disposés à l'extrémité d'un cône permettant la répartition de la charge sur la totalité des grains de catalyseur en mouvement. Un tel système présente cependant l'inconvénient de provoquer le contact d'une partie de la charge liquide avec les parois du réacteur d'où une formation excessive et néfaste de coke.

Le brevet US-A-3 812 029 décrit un injecteur particulier permettant d'obtenir de fines gouttelettes de charge ; cependant cet injecteur ne permet pas une bonne répartition des gouttelettes d'où une mauvaise vaporisation des hydrocarbures et un cokage excessif. De plus, lors de l'utilisation de charges lourdes, cet injecteur est souvent assez rapidement obstrué.

La demande de brevet EP-A-220 349 décrit un injecteur particulier, comprenant une spirale, permettant l'obtention de gouttelettes de diamètre moyen inférieur à environ (35x10$^{-5}$ mètre) 350 microns tout en évitant au moins partiellement le contact de la charge avec les parois de la zone réactionnelle. Toutefois, la formation de tourbillons de gouttelettes de charge à proximité de ces injecteurs perturbe l'écoulement des grains de catalyseur et entraîne une augmentation du phénomène de rétromélange (en anglais "back mixing") ce qui est préjudiciable au bon fonctionnement du procédé.

L'intérêt d'injecter dans le réacteur la charge à traiter à grande vitesse et sous forme de très fines gouttelettes, est bien connu dans la technique (voir brevets US 2 891 000 et 2 994 659).

La présente invention a pour but de pallier les inconvénients des procédés d'injection de la charge d'hydrocarbures de l'art antérieur, et de permettre d'obtenir, en particulier dans le cas du craquage des charges lourdes, un contact optimal des hydrocarbures avec les grains de catalyseur du fait d'une atomisation, homogène et instantanée, sous forme de fines gouttelettes dans la zone d'injection.

Plus précisément, la présente invention permet de créer des gouttelettes plus petites que celles formées dans un injecteur venturi monocol ayant une section de passage équivalente au niveau du col et opérant dans les mêmes conditions.

En d'autres termes, la présente invention permet d'améliorer les performances d'un injecteur de type venturi en augmentant l'efficacité du contact entre la phase gazeuse et la phase liquide dans l'injecteur.

L'injecteur venturi est en effet particulièrement bien adapté à l'injection d'hydrocarbures dans un procédé de craquage catalytique. Il est constitué au minimum d'une chambre de mélange dans laquelle on introduit la charge d'hydrocarbures et le gaz d'atomisation à faible vitesse, d'un convergent dans lequel on accélère à co-courant les phases liquide et gazeuse, et d'un divergent dans lequel gaz et liquide coulent homogènement, le liquide étant atomisé en fines gouttelettes. Cet injecteur permet d'atomiser les hydrocarbures en fines gouttelettes et en utilisant un taux de vapeur faible.

Par ailleurs, la présente invention permet de former moins de coke.

La consommation en vapeur, pour une taille de gouttelettes donnée, est réduite. La réduction des coûts de fonctionnement associée est très appréciée des utilisateurs.

Un autre avantage de la présente invention concerne la compacité de l'équipement ; les données comparatives citées ci-après permettront de mieux apprécier cet avantage.

Ainsi la présente invention a pour objet un dispositif d'injection d'une charge d'hydrocarbures dans un réacteur de craquage catalytique comprenant notamment une enveloppe, un tube principal d'alimentation de la charge, une entrée pour un fluide auxiliaire gazeux qui entoure le tube principal.

Selon l'invention, le tube d'alimentation de la charge est divisé, à l'intérieur de l'enveloppe, en au moins deux conduits secondaires destinés à répartir uniformément ladite charge, chaque conduit secondaire débouche en amont d'un élément de type venturi, le fluide auxiliaire gazeux est mélangé à la charge dans une chambre de mélange située à l'entrée dudit venturi.

De façon particulière, les éléments de type venturi sont disposés parallèlement les uns aux autres à l'intérieur de l'enveloppe.

Conformément à un mode de réalisation de l'invention, l'entrée pour le fluide auxiliaire est disposée parallèlement à l'un au moins desdits conduits secondaires.

L'un au moins desdits conduits secondaires peut être muni intérieurement d'une restriction de sa section de passage. Selon un mode de réalisation de l'invention, l'élément de type venturi présente au niveau de son convergent, un prolongement.

Avantageusement, l'enveloppe peut comprendre un embout comportant une ouverture, placé en aval desdits venturi et, destiné à diriger le mélange charge et fluide auxiliaire vers une zone réactionnelle extérieure à l'enveloppe.

L'embout peut être agencé de façon à créer un jet plat.

Plus précisément, les parois de l'ouverture de l'embout définissent un angle $\alpha$ compris entre environ 30 et 75°.

Selon une particularité de l'invention, les éléments de type venturi présentent un convergent d'angle compris entre 10 et 45° et un divergent d'angle compris entre 2 et 14°.

Selon un premier mode de réalisation des dispositifs selon l'invention, chaque conduit secondaire comprend au moins un orifice qui débouche sensiblement coaxialement en amont du venturi.

Selon un deuxième mode de réalisation du dispositif selon l'invention, chaque conduit secondaire peut être obturé à son extrémité et comprendre une pluralité d'orifices ou de fentes disposés à sa périphérie et adaptés à débiter la charge transversalement à l'écoulement du fluide secondaire. Ces orifices ou fentes débouchent en amont du venturi et délivrent la charge de préférence sensiblement perpendiculairement à l'écoulement du fluide secondaire.

Le dispositif selon l'invention peut être appliqué au craquage catalytique de charges lourdes d'hydrocarbures.

D'autres caractéristiques, détails et avantages de la présente invention apparaîtront plus clairement à la lecture de la description qui va suivre, faite à titre illustratif et nullement limitatif, en référence aux figures annexées.

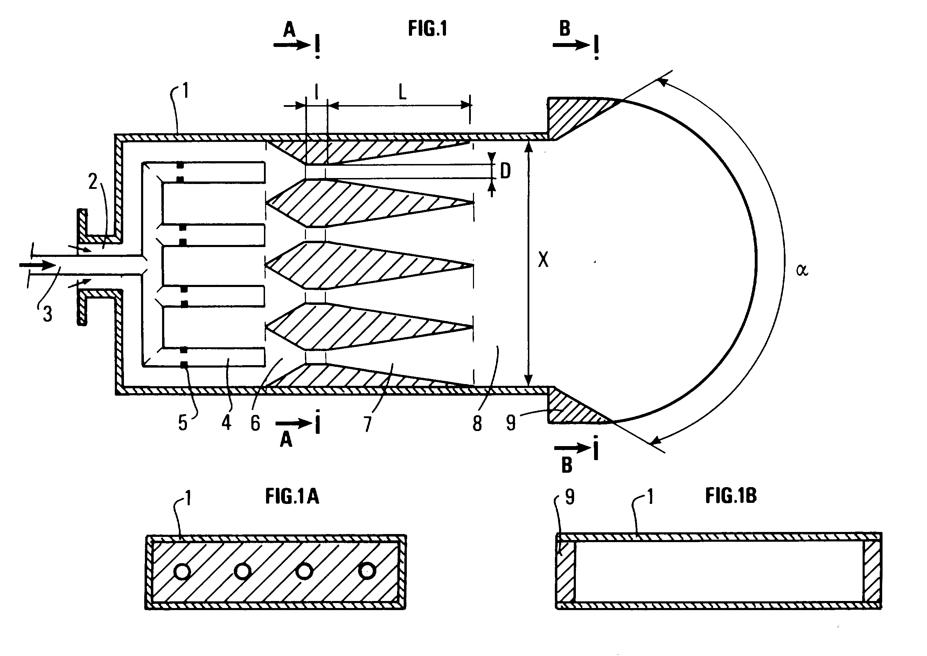

Un mode de réalisation préféré du dispositif selon l'invention apparaît en coupe longitudinale sur la figure 1 et les figures 1A et 1B.

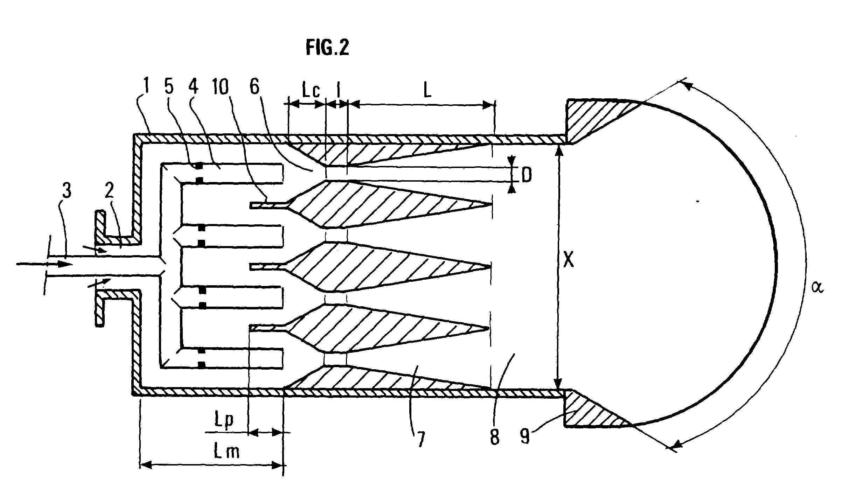

La figure 2 montre en coupe longitudinale un autre mode de réalisation de l'invention.

Selon ces figures, une enveloppe extérieure 1 de forme allongée, présente une ouverture 2 à l'une de ses extrémités. Un conduit principal 3 traverse l'ouverture 2 et se divise en n conduits secondaires 4 à l'intérieur de l'enveloppe 1.

Chaque conduit secondaire 4 est préférentiellement équipé intérieurement d'une restriction 5 destinée à répartir uniformément le fluide qui le traverse. Par ailleurs, chaque conduit secondaire 4 débouche coaxialement à l'entrée 6 d'un venturi 7 dont les caractéristiques seront détaillées ci-après.

L'autre extrémité, ou sortie 8, des venturis 6 débouche près de la sortie de l'enveloppe cylindrique 1.

Préférentiellement la sortie de l'enveloppe 1 peut comprendre un embout 9 ayant une forme particulière : l'embout 9 présente selon la figure 1 une ouverture dont les parois définissent un angle $\alpha$ compris entre environ 30 et 75°.

De façon particulière dans le cas d'une application FCC, la charge à craquer est introduite via le conduit principal 3 tandis que le fluide auxiliaire gazeux (généralement de la vapeur d'eau ou tout autre forme gazeuse acceptable) est introduit par l'ouverture 2. La charge est répartie entre les n conduits secondaires 4 chacun muni d'une restriction 5.

Selon l'exemple donné par les figures annexées, quatre conduits secondaires sont prévus. De façon réaliste il peut être envisagé des dispositifs comprenant de 2 à 10 venturis. De plus, selon le mode de réalisation de la figure 1, les axes de ces conduits appartiennent un même plan comme montré sur la figure 1A. La forme générale de l'enveloppe est donc plate.

Les conduits secondaires 4 peuvent être obturés à leur extrémité et munis de fentes ou orifices destinés à débiter la charge transversalement à l'écoulement du fluide secondaire. Le bouchon (non représenté) de chaque conduit secondaire peut être conique afin de faciliter le mélange des deux fluides.

Les quatre venturis 7, coaxiaux à chacun des quatre conduits secondaires 4, présentent donc chacun une entrée 6 au niveau de laquelle le mélange composé de la charge et du fluide auxiliaire est formé : la charge arrivant des conduits secondaires 4 et le fluide entourant les conduits secondaires 4.

Le mélange ainsi formé est donc accéléré très fortement au niveau de chaque venturi. Cette disposition permet le cisaillement des veines de liquide en fines gouttelettes et donc une atomisation quasi-instantanée. La présente invention permet donc de réaliser un prémélange en amont de chaque venturi ; ceci conduit à un contact plus intime entre le liquide et le gaz, par un cisaillement de l'arrivée du liquide par le courant gazeux.

Plus précisément, l'angle du convergent du venturi est compris entre 10 et 45° et l'angle du divergent est compris entre 2 et 14°. Le diamètre de chaque venturi au niveau de la sortie 8 sera calculé de telle façon que la vitesse de la suspension en sortie soit comprise entre 20 et 150 m/s, de préférence entre 50 et 100 m/s.

Chaque venturi peut comprendre une zone rectiligne (col) entre son convergent et son divergent, bien que cette particularité ne soit pas obligatoire.

La longueur 1 du col mesurée sur l'axe longitudinal du venturi, est préférentiellement comprise entre 0 et 5 fois son diamètre D.

La longueur L de chaque divergent peut être définie en fonction de celle d'un injecteur monocol. En effet, la longueur L1 de chacun des divergents dans un injecteur multicol de N orifices est inférieure à la longueur du divergent d'un injecteur monocol L2 dont la section de passage au col correspondrait à la somme des sections de passage au col de l'injecteur multicol.

La longueur L1 est inférieure à $\frac{L2}{\sqrt{N}}$

Comme la longueur L2 est généralement comprise entre 0 et 20 fois le diamètre du col, un injecteur multicol composé de quatre orifices de section de passage total égale à la section de passage d'un injecteur monocol aurait une longueur L de divergent inférieure à la moitié de la longueur de divergent de l'injecteur monocol correspondant.

Le dimensionnement des venturis dépend bien entendu de la vitesse et du débit de la charge et de celles de la vapeur.

La température d'introduction de la charge peut être comprise entre 80° et 350°C selon sa composition et le procédé mis en oeuvre.

Le débit de charge totale alimentant le réacteur est généralement inférieur à 10 000T/j. En moyenne, les débits de charge sont de l'ordre de 5 000T/j. Selon l'invention, la charge est répartie dans plusieurs injecteurs, le nombre variant de 1 à 20, préférentiellement de 3 à 12.

Le fluide gazeux auxiliaire, utilisé pour favoriser l'atomisation de la charge dans le dispositif selon l'invention est habituellement de la vapeur d'eau ou un fluide gazeux relativement riche en hydrogène ou en composés hydrogénés.

À titre illustratif, si l'on utilise de la vapeur d'eau, le taux de vapeur peut être compris entre 1 et 10% de la charge et préférentiellement entre 2 et 6 %.

Au niveau du col du venturi, le flux du mélange est généralement compris entre 2000 et 10 000 kg/s/m$^2$.

La figure 2 illustre un mode de réalisation de l'invention qui diffère de celui de la figure 1 par le fait que l'élément 7 de type venturi présente un prolongement 10 au niveau de son convergent 6. Le prolongement 10 pénètre ainsi dans la chambre de mélange, à travers les conduits secondaires 4, ce qui contribue à mieux diviser le mélange.

La longueur Lp du prolongement 10 mesurée selon l'axe longitudinal est préférentiellement inférieure à la moitié de la longueur Lm de la chambre de mélange.

Comme il a déjà été dit, une application préférée de l'invention concerne le craquage catalytique de charges d'hydrocarbures. La présente invention convient particulièrement bien au craquage de charges lourdes caractérisées par le fait que 10 % du poids de la charge au moins est supérieur à 500°C en température d'ébullition, telles que par exemple des charges contenant au moins une fraction provenant du fond de la colonne de distillation atmosphérique, hydrotraitée ou non.

Le rapport catalyseur/charge massique dépend de l'opération et du dimensionnement global de l'unité. Il est généralement compris entre 3 et 15 et préférentiellement entre 4 et 8.

Lc étant la longueur du convergent mesurée selon l'axe longitudinal de l'injecteur, les conduits secondaires 4 peuvent déboucher à l'intérieur, au niveau de sa section maximale ou encore à l'extérieur du convergent 6 à une distance maximale de Lc/2 de la section la plus grande du convergent 6.

La position et l'orientation relative des injecteurs de la charge et du catalyseur peuvent résulter en une circulation à co ou à contre-courant des deux milieux dans la zone d'injection où charge et catalyseur sont mis en contact. Le brevet français FR 2 585 030 montre un procédé et un dispositif de craquage catalytique selon lequel charge et catalyseur circulent à contre-courant tandis que le brevet français FR 2 644 795 divulgue une circulation à co-courant.

La présente invention s'applique indifféremment à ces deux types de fonctionnement.

À titre d'exemple, les réacteurs de craquage catalytique capables de mettre en oeuvre des injecteurs conforme à l'invention peuvent présenter des diamètres compris entre 30 cm et 2 m selon la capacité envisagée.

Le dispositif selon l'invention fonctionne particulièrement bien dans des réacteurs dans lesquels le catalyseur présente une densité de grains comprise entre 1000 kg/m$^3$ et 2000 kg/m$^3$, avec une température de catalyseur régénéré comprise entre 600 et 900°C.

Les catalyseurs utilisables dans le procédé faisant l'objet de la présente invention comprennent les catalyseurs de craquage de type alumino-silicates cristallins et certains types de silice-alumine, de silice-magnésie ou de silice-zirconium, tous ayant des activités de craquage relativement élevées. Les alumino-silicates cristallins peuvent se trouver à l'état naturel ou être préparés par synthèse, selon des techniques bien connues de l'homme du métier. Ils peuvent être choisis parmi les zéolithes de synthèse ou les argiles, telles que la faujasite, certaines mordénites, la montmorillonite, les argiles pontées, les alumino-phosphates, ou similaires.

A titre de comparaison, avec un injecteur monocol, deux exemples sont donnés ci-après. Le premier (exemple 1) permet de voir l'amélioration apportée par l'invention au niveau de la taille des gouttelettes, tandis que le second exemple met en évidence la moindre consommation de gaz selon l'invention.

Exemple 1 : comparaison des performances de deux injecteurs

| | injecteur venturi monocol | injecteur venturi multicol |
|---|---|---|
| ⌀ venturi (mm) | 48 | 24 |
| nombre de venturis | 1 | 4 |
| débit de gaz (kg/s/m$^2$) au col | 250 | 250 |
| débit de liquide (kg/s/m$^2$) au col | 5000 | 5000 |
| diamètre de goutte moyen (diamètre de Sauter) | d | 0,85d |

Exemple 2 : comparaison de la consommation de gaz de deux injecteurs

| | injecteur venturi monocol | injecteur venturi multicol |
|---|---|---|
| ⌀ venturi (mm) | 48 | 24 |
| nombre de venturis | 1 | 4 |
| débit de gaz (kg/s/m$^2$) au col | 250 | 175 |
| débit de liquide (kg/s/m$^2$) au col | 5000 | 5000 |
| diamètre de goutte moyen (diamètre de Sauter) | d | d |

**Revendications**

1.  Dispositif d'injection d'une charge d'hydrocarbures dans un réacteur de craquage catalytique comprenant notamment une enveloppe (1), un tube principal (3) d'alimentation de la charge, une entrée (2) pour un fluide auxiliaire gazeux, qui entoure le tube principal (3) caractérisé en ce que le moyen (3, 4) d'alimentation de la charge consiste en un conduit multicol comprenant un conduit principal (3) qui se divise en au moins deux conduits secondaire (4) destinés à répartir uniformément ladite charge à l'intérieur de l'enveloppe (1), en ce que chaque conduit secondaire (4) débouche en amont d'un élément (7) de type venturi, et en ce que la dispositif des conduits secondaires (4) dans l'enveloppe (1) est telle que, le fluide auxiliaire gazeux est mélangé à la charge dans une chambre de mélange (6) située à l'entrée dudit venturi (7), afin de vaporiser la charge en aval (8) desdits venturi (7).

2.  Dispositif selon la revendication 1, caractérisé en ce que les éléments (7) de type venturi sont disposés parallèlement les uns aux autres à l'intérieur de l'enveloppe (1).

**3.** Dispositif selon l'une quelconque des revendications 1 ou 2, caractérisé en ce que l'entrée (2) pour le fluide auxiliaire est disposée parallèlement à l'un au moins desdits conduits secondaires (4).

**4.** Dispositif selon l'une quelconque des revendications précédentes, caractérisé en ce que l'un au moins desdits conduits secondaires (4) est muni intérieurement d'une restriction (5) de sa section de passage.

**5.** Dispositif selon l'une quelconque des revendications précédentes, caractérisé en ce que l'élément (7) de type venturi présente, au niveau de son convergent (6) un prolongement (10).

**6.** Dispositif selon la revendication 5, caractérisé en ce que ledit prolongement (10) présente une longueur Lp, mesurée sur l'axe longitudinal de l'injecteur, inférieure à la moitié de la longueur Lm de la chambre de mélange.

**7.** Dispositif selon l'une quelconque des revendications précédentes, caractérisé en ce que l'enveloppe (1) comprend un embout (9) comportant une ouverture, placé en aval desdits venturi (7) et, destiné à diriger le mélange charge et fluide auxiliaire vers une zone réactionnelle extérieure à l'enveloppe.

**8.** Dispositif selon la revendication 7, caractérisé en ce que l'embout (9) est agencé de façon à créer un jet plat.

**9.** Dispositif selon l'une quelconque des revendications 7 ou 8, caractérisé en ce que les parois de l'ouverture de l'embout (9) définissent un angle $\alpha$ compris entre environ 30 et 75°.

**10.** Dispositif selon l'une quelconque des revendications précédentes, caractérisé en ce que les éléments (7) de type venturi présentent un convergent (6) d'angle compris entre 10 et 45° et un divergent d'angle compris entre 2 et 14°.

**11.** Dispositif selon l'une quelconque des revendications précédentes, caractérisé en ce qu'il comprend quatre conduits secondaires (4).

**12.** Dispositif selon l'une quelconque des revendications précédentes, caractérisé en ce que les axes des conduits secondaires (4) appartiennent à un même plan.

**13.** Dispositif selon l'une quelconque des revendications précédentes, caractérisé en ce que chaque conduit secondaire (4) comprend au moins un orifice qui débouche en amont du venturi et sensiblement coaxialement audit venturi (7).

**14.** Dispositif selon l'une quelconque des revendications 1 à 12, caractérisé en ce que chaque conduit secondaire (4) comprend une pluralité d'orifices ou de fentes disposés à sa périphérie et adaptés à débiter la charge transversalement à l'écoulement du fluide secondaire, lesdits orifices ou fentes débouchant en amont du ventrui (7).

**15.** Application du dispositif selon l'une quelconque des revendications précédentes au craquage catalytique de charges lourdes d'hydrocarbures.

**Patentansprüche**

**1.** Vorrichtung zur Injektion einer aus Kohlenwasserstoffen bestehenden Charge in einen katalytischen Crackreaktor, der insbesondere einen Mantel (1), eine Hauptröhre (3) zum Speisen der Charge, einen Eintritt (2) für ein gasförmiges Hilfsfluid umfaßt, welches die Hauptröhre (3) umschließt, dadurch gekennzeichnet, daß das Mittel (3, 4) zum Speisen der Charge aus einer Leitung mit mehreren Hälsen besteht, eine Hauptleitung (3) umfassend, welche in wenigstens zwei Sekundärleitungen (4) sich aufteilt, die dazu bestimmt sind, diese Charge im Inneren des Mantels (1) zu verteilen, daß diese Sekundärleitung (4) vor einem Element (7) vom Venturi-Typ mündet, und daß die Vorrichtung der Sekundärleitungen (4) im Mantel (1) derart ist, daß das gasförmige Hilfsfluid mit der Charge in einer Mischkammer (6) vermischt wird, die sich am Eintritt eines Venturi-Rohres (7) befindet, um die Charge (8) hinter diesen Venturis (7) zu verdampfen.

**2.** Vorrichtung nach Anspruch 1, dadurch gekennzeichnet, daß die Elemente (7) vom Venturi-Typ parallel zueinander im Inneren des Mantels (1) angeordnet sind.

**3.** Vorrichtung nach einem der Ansprüche 1 oder 2, dadurch gekennzeichnet, daß der Eintritt (2) für das Hilfsfluid parallel zu wenigstens einer dieser Hilfsleitungen (4) angeordnet ist.

4. Vorrichtung nach einem der vorhergehenden Ansprüche, dadurch gekennzeichnet, daß wenigstens eine dieser Hilfsleitungen (4) innen mit einer Einschnürung (5) ihres Durchgangsquerschnittes versehen ist.

5. Vorrichtung nach einem der vorhergehenden Ansprüche, dadurch gekennzeichnet, daß das Element vom Venturi-Typ in Höhe seiner Konvergenz (6) eine Verlängerung (10) aufweist.

6. Vorrichtung nach Anspruch 5, dadurch gekennzeichnet, daß diese Verlängerung (10) eine Länge Lp, gemessen über die Längsachse des Injektors, aufweist, die geringer als die Hälfte der Länge Lm der Mischkammer ist.

7. Vorrichtung nach einem der vorhergehenden Ansprüche, dadurch gekennzeichnet, daß der Mantel (1) eine Muffe (9) umfaßt, die über eine Öffnung verfügt, hinter diesen Venturis (7) angeordnet und dazu bestimmt, das Gemisch aus Charge und Hilsfluid gegen eine Reaktionszone außerhalb des Mantels zu leiten.

8. Vorrichtung nach Anspruch 7, dadurch gekennzeichnet, daß das Muffenende (9) so ausgebildet ist, daß ein Flachstrahl erzeugt wird.

9. Vorrichtung nach einem der Ansprüche 7 oder 8, dadurch gekennzeichnet, daß die Wände der Öffnung der Muffe (9) einen Winkel $\alpha$ zwischen 30 und 75° definieren.

10. Vorrichtung nach einem der vorhergehenden Ansprüche, dadurch gekennzeichnet, daß die Elemente (7) vom Venturi-Typ einen Konvergenzwinkel (6) zwischen 10 und 45° und einen Divergenzwinkel zwischen 2 und 14° aufweisen.

11. Vorrichtung nach einem der vorhergehenden Ansprüche, dadurch gekennzeichnet, daß sie vier Sekundärleitungen (4) umfaßt.

12. Vorrichtung nach einem der vorhergehenden Ansprüche, dadurch gekennzeichnet, daß die Achsen der Sekundärleitungen (4) zu ein und dergleichen Ebene gehören.

13. Vorrichtung nach einem der vorhergehenden Ansprüche, dadurch gekennzeichnet, daß jede Sekundärleitung (4) wenigstens eine Öffnung umfaßt, die vor dem Venturi-Rohr und im wesentlichen koaxial zu diesem Venturi-Rohr (7) mündet.

14. Vorrichtung nach einem der Ansprüche 1 bis 12, dadurch gekennzeichnet, daß jede Sekundärleitung (4) eine Vielzahl von Öffnungen oder Schlitzen umfaßt, die über ihren Umfang angeordnet und so ausgelegt sind, daß sie die Charge quer zur Strömung des Sekundärfluids zuteilen, wobei diese Öffnungen oder Schlitze vor dem Venturi-Rohr (7) münden.

15. Anwendung der Vorrichtung nach einem der vorhergehenden Ansprüche auf das katalytische Cracken von schweren Kohlenwasserstoffchargen.

**Claims**

1. Device for injection of a charge of hydrocarbons into a catalytic cracking reactor comprising notably an enclosure (1), a main tube (3) for delivery of the charge, an inlet (2) for a gaseous auxiliary fluid, which surrounds the main tube (3), characterised in that the means (3, 4) for delivery of the charge consists of a multi-neck conduit comprising a main conduit (3) which is divided into at least two secondary conduits (4) designed to distribute said charge uniformly inside the enclosure (1), in that each secondary conduit (4) debouches upstream of a venturi-type element (7), and in that the disposition of the secondary conduits (4) in the enclosure (1) is such that the gaseous auxiliary fluid is mixed with the charge in a mixing chamber (6) situated at the inlet of said venturi (7) in order to vaporise the charge downstream (8) of said venturis (7).

2. Device according to claim 1, characterised in that the venturi-type elements (7) are disposed parallel to one another inside the enclosure (1).

3. Device according to any one of claims 1 or 2, characterised in that the inlet (2) for the auxiliary fluid is disposed parallel to at least one of said secondary conduits (4).

4. Device according to any one of the preceding claims, characterised in that at least one of said secondary conduits (4) is provided internally with a restriction (5) of its passage section.

5. Device according to any one of the preceding claims, characterised in that the venturi-type element (7) exhibits an extension (10) level with its convergent portion (6).

6. Device according to claim 5, characterised in that said extension (10) exhibits a length Lp, measured on the longitudinal axis of the injector, less than half the length Lm of the mixing chamber.

7. Device according to any one of the preceding claims, characterised in that the enclosure (1) comprises an end piece (9) having an opening and being placed downstream of said venturis (7) and designed to direct the mixture of charge and auxiliary fluid to a reaction zone outside the enclosure.

8. Device according to claim 7, characterised in that the end piece (9) is arranged so as to create a flat jet.

9. Device according to any one of claims 7 or 8, characterised in that the walls of the opening of the end piece (9) define an angle $\alpha$ lying between about 30 and 75°.

10. Device according to any one of the preceding claims, characterised in that the venturi-type elements (7) exhibit a convergent portion (6) with an angle lying between 10 and 45° and a divergent portion with an angle lying between 2 and 14°.

11. Device according to any one of the preceding claims, characterised in that it comprises four secondary conduits (4).

12. Device according to any one of the preceding claims, characterised in that the axes of the secondary conduits (4) lie in the same plane.

13. Device according to any one of the preceding claims, characterised in that each secondary conduit (4) comprises at least one orifice which debouches upstream of the venturi and substantially coaxially with said venturi (7).

14. Device according to any one of claims 1 to 12, characterised in that each secondary conduit (4) comprises a plurality of orifices or slots disposed at its periphery and adapted to deliver the charge transversely to the flow of the secondary fluid, said orifices or slots debouching upstream of the venturi (7).

15. Application of the device according to any one of the preceding claims to catalytic cracking of heavy hydrocarbon charges.

**FIG.1**

**FIG.1A**

**FIG.1B**

EP 0 773 276 B1

FIG.2